# EUROPEAN PATENT APPLICATION

(11) **EP 3 905 065 A1**
(43) Date of publication of application: **03.11.2021**
(21) Application number: 20172115.6
(22) Date of filing: 29.04.2020
(51) Int. Cl.: G06F 16/332, G06F 16/33

(54) **COMPUTER-IMPLEMENTED METHOD FOR FINDING A TECHNICAL PROBLEM SOLUTION, DATABASE AND COMPUTER PROGRAM**

(71) Applicant: Siemens Aktiengesellschaft, 80333 München (DE)
(72) Inventor: Althammer, Sophia, 80799 München (DE); Buckley, Mark, 81829 München (DE)

(57) **Abstract**

The computer-implemented method is a method for finding a technical problem solution. The method comprises the steps of consulting a database comprising a multitude of intellectual property right documents that comprise a linguistic expression of a technical problem solution, and of consulting a document content parameter based on a statistic peculiarity of the linguistic expressions that is attributed to each of the intellectual property right documents and that is specific for the content of the intellectual property right documents, and of utilizing the document content parameter for finding at least one intellectual property right document that contains the technical problem solution or for determining than no intellectual property right document containing the technical problem solution can be found.

## Description

The invention relates to a computer-implemented method for finding a technical problem solution, a database for enabling this method and a computer program for carrying out this method.

One of the major goals of research and development is finding technical problem solutions and turning them into products and services. However, particularly in areas that belong to current technological trends, many players are active in the field and parallelly generate technical problem solutions on their own. Perceivably, parallel developments are the more likely to occur the higher the attractiveness of the technological field R&D is carried out in.

On the other hand, the more R&D is carried out, the more publicly accessible literature is available detailing technical problem solutions. In fact, a steeply increasing number of technical publications on technical problem solutions is available, e.g. scientific literature, technological literature such as documentations, patents and standard definitions, and academic theses.

However, in many fields keeping an overview over technological developments is almost impossible in practice. This fact is particularly relevant for research and development units of companies. It would be helpful to quickly check, whether current technical problem solutions have been envisages previously or whether technical problem solutions are truly original. It would be particularly helpful to find a specific technical problem solution in an automized way.

Up to now, practically only literature searches in the various databases are widely available in order to accomplish this task.

Therefore, it is the goal of the current invention to provide a novel method to find a technical problem solution. In addition, it is a goal of the present invention to provide a database supporting the method of finding a technical problem solution. Furthermore, it is a goal of the present invention to provide a computer program that can support finding a technical problem solution.

This problem of the invention is solved with a computer-implemented method of finding a technical problem solution with the features contained in claim 1 and with a database with the features contained in claim 12 and with a computer program product with the features contained in claim 13.

The computer-implemented method according to the invention is a method for finding a technical problem solution. The method according to the invention comprises the steps of consulting a database comprising a multitude of intellectual property right documents that each comprise a linguistic expression of a technical problem solution, and of consulting a document content parameter based on a statistic peculiarity of the linguistic expressions that is attributed to each of the intellectual property right documents and that is specific for the content of the intellectual property right documents, and of utilizing the document content parameter for finding at least one intellectual property right document that contains the technical problem solution or for determining than no intellectual property right document containing the technical problem solution can be found.

The method according to the invention advantageously makes use of the specific technical information in the form of intellectual property right documents. Intellectual property right documents are not only characterized by providing technical problem solutions. A further characteristics of intellectual property right documents in general is that the usage of the language is highly specific and significantly deviates from other types of technical documents and the general language.

It is understood, that the phrase "technical problem solution" refers to a "solution with a technical character to a technical problem" and/or "a technical solution to a problem", preferably a "technical solution to a technical problem", which are frequently subject to technical intellectual property right documents such as patents or utility models. It is further understood that the phrase "intellectual property right documents that comprise a linguistic expression of a technical problem solution" refers to technical intellectual property rights which are intended to grant monopolies for technical inventions.

It is understood that the method for finding a technical problem solution may also be rephrased as a method for finding a document containing the technical problem solution.

Thus, it is the core idea of the invention to choose intellectual property right documents as a source of technical problem solutions and to exploit the characteristic deviations of the language usage in intellectual property right documents for automized content determination. The content determination can be used to attribute content information parameters to the individual intellectual property right documents. With these document content parameters, the document containing a specific technical problem solution can be easily found and accordingly the technical problem solution itself is found in the form of the respective intellectual property right document.

With the method according to the invention, a semantic approach to finding technical problem solutions can be conducted in a truly automized manner. Traditional approaches rather search technical problem solutions via keywords when searching academic journal databases or using patent classes corresponding to a specific patent classification scheme such as the international patent classification IPC for patent database searches. The method according to the invention allows finding intellectual property right documents with a different and independent route using computational linguistics technology in an efficient manner.

Due to the application of computational linguistics, also legal boundaries e.g. of the claim formulation may be considered when finding respective technical problem solutions. Thus, technical problem solutions may be found with the method according to the invention in a more efficient way compared to traditional approaches.

The method according to the invention also provides the opportunity to find technical problem solutions that may not be found using, for example, metadata of intellectual property right documents such as patent classes. The semantic information about a technical problem solution rather constitutes an additional and not necessarily dependent dimension to find technical problem solutions which can improve success of finding technical problem solutions.

In a preferred aspect of the invention, the document content parameter is based on a statistic peculiarity of the linguistic expressions in the form of technical language expressions and/or technical words and/or technical terms of intellectual property right documents. Additionally, or alternatively, the document content parameter is specific for the technical content of the intellectual property right documents and may be rephrased as a technical document content parameter.

In a preferred aspect of the method according to the invention, a document containing an initial technical problem solution is consulted. Preferably, the document containing the initial technical problem solution is or comprises also an intellectual property right document such as a patent document or a utility model document. In this aspect of the invention, finding the technical problem solution is preferably directed to finding an intellectual property right document containing a technical problem solution that is as similar to the document containing initial technical problem solution as possible.

In this aspect of the invention, an intellectual property right document of an applicant of the method according to the invention can be used as the document containing the initial technical problem solution. Advantageously, the intellectual property right document containing the initial technical problem solution may be an intellectual property right document of the applicant itself. This aspect of the invention allows the applicant to receive information about technical problem solutions of competitors that are similar like the initial technical problem solution of the applicant.

For example, this aspect of the invention allows to monitor third parties such as competitors of the applicant in order to detect either potential infringements of intellectual property right of the applicant by third parties or to evaluate a freedom to operate concerning intellectual property rights of third parties. Furthermore, the method according to the invention allows to estimate the legal validity of the intellectual property right document of the applicant. A further advantageous alternative aspect would be the usage not of an actual intellectual property right document of the applicant of the method, but to consult only a draft for an intellectual property right document of the applicant. In this aspect of the invention the applicant can get an in-depth estimate the legal validity of a potential future intellectual property right application without filing the intellectual property right. This may provide the opportunity of cost savings of the applicant and a reduction of the so-called patent jungle by refraining from adding unnecessary disclosures to the increasing magnitude of intellectual property right documents.

In a further and advantageous aspect of the method according to the invention, the document content parameter based on the statistic peculiarity of the linguistic expressions is also attributed to the document containing the initial technical problem solution and the document content parameter of the latter is compared to the document content parameters of the multitude of intellectual property right documents.

In this aspect of the invention, similar or identical procedures may be used for deriving the document content parameter for the document containing the initial technical problem solution and for the document content parameters of the multitude of intellectual property right documents. A comparison of the document content parameters may be achieved with established methods such as cosine distance in case the document content parameters have the a vectoral representation.

Preferably in the method according to the invention, the intellectual property right documents comprise patent documents and/or utility model documents. Particularly patent documents and utility model documents are notorious for statistical peculiarities in the language usage. Thus, with these types of intellectual property right documents, the method according to the invention can be efficiently and effectively conducted.

In an advantageous aspect of the method according to the invention, the statistic peculiarity is a statistic peculiarity compared to everyday language or general technical language. In other words, statistic peculiarities in this aspect of the invention mean statistic deviations or differences in the language usage compared to other technical language usage or general, i.e. every day, language usage.

Intellectual property right documents exhibit some statistic peculiarities in their language usage which significantly differ from the language used in other technical documents or from language used in everyday life. Presumably, these statistic peculiarities are strongly connected to the technical content the intellectual property right document is focussing on. Thus, these statistic peculiarities can be efficiently used for evaluating the technical content of the intellectual property right documents with a high sensitivity to these statistical peculiarities. Therefore, very distinctive document information parameters can be derived which enable efficiently finding technical problem solutions by using these distinctive document information parameters.

In a preferred aspect of the invention the statistic peculiarity is an occurrence of word compounds, particularly noun compounds.

One proven statistical peculiarity of intellectual property right documents is the higher occurrence of word compounds, especially noun compounds. Typically, these noun compounds are used to generally describe special features that distinguish a technical problem solution described in the intellectual property right document from the state of the art. Thus, particularly the occurrence of word compounds, especially noun compounds, may be efficiently used for finding technical problem solutions.

Advantageously, in the method according to the invention the document content parameters results from a neural network that represents a language model.

Neural networks are increasingly used for language processing in general. Particularly neural networks representing language models, such as BERT (acronym abbreviating "Bidirectional Encoder Representations from Transformers") are considered established computational linguistic technologies which are trained to process general language. Such neural networks make few assumptions about the type of documents that are processed. Neural networks representing language models advantageously generate document representations, which can readily be used as document content parameters in the method according to the invention. Such document content parameters in the form of document representations allow to evaluate a similarity measures in the form of cosine distances or other measures established in the context of neural networks representing language models.

In an advantageous aspect of the method according to the invention the document content parameter results from an input to the neural network that is based on the intellectual property right document of the database and/or the document containing the initial technical problem solution.

According to the invention, the intellectual property right document is preferably preprocessed prior to its input into the neural network. In many cases, the textual content of the intellectual property right documents needs to be extracted from the intellectual property right documents first. Such extractions of the textual content may be conducted with software routines extracting plain text from PDF-Files (PDF = "portable document format") if the intellectual property right documents are consulted as PDF files and/or with scripts extracting plain text from markup files such as HTML files or XML files if the intellectual property right documents are consulted as markup files.

In a further aspect of the method according to the invention the input is masked dependent on the statistic peculiarity prior its input to the neural network. As detailed above, statistical peculiarities of intellectual property right documents can be consulted for attributing document content parameters that indicate specific technical problem solutions.

Advantageously, in an additional aspect of the method according to the invention finding the intellectual property right document means finding the intellectual property right document based on similarities of the document content parameters.

Finding intellectual property right documents does not necessarily require a document with an initial technical problem solution that serves as a search seed for finding technical problem solutions. In this aspect, instead, similarities among the document content parameters of the multitude of intellectual property documents themselves are used for finding technical problem solutions. In this aspect of the invention, advantageously clusters of similar intellectual property right documents may be identified and utilized for an intellectual property right landscaping, particularly a patent landscaping. This aspect of the invention may apply clustering algorithms such as k-means.

Another advantageous application of this aspect of the invention is an automized classification of patents, that allows classifying patents in known and established patent classes of classification systems such as the International Patent Classification (IPC) system.

The database according to the invention is configured to conduct the computer-implemented method for finding a technical problem solution as described above. The database according to the invention comprises a multitude of intellectual property right documents that comprise a linguistic expression of a technical problem solution, and comprises a document content parameter based on a statistic peculiarity of the linguistic expressions that is attributed to each of the intellectual property right documents and that is specific for the content of the intellectual property right documents.

The computer program product according to the invention is configured to carry out the steps of the computer-implemented method for finding a technical problem solution as described above.

An example of carrying out the invention is shown in the drawing and described in more detail in the following.

The drawings show:
- Fig. 1: a training phase for training a computer system for carrying out the method for finding a technical problem solution according to the invention in a schematic flow chart,
- Fig. 2: the generation of a database according to the invention for carrying out the method according to the invention in a schematic flow chart and
- Fig. 3: the flowchart of the method for finding a technical problem solution according to the invention.

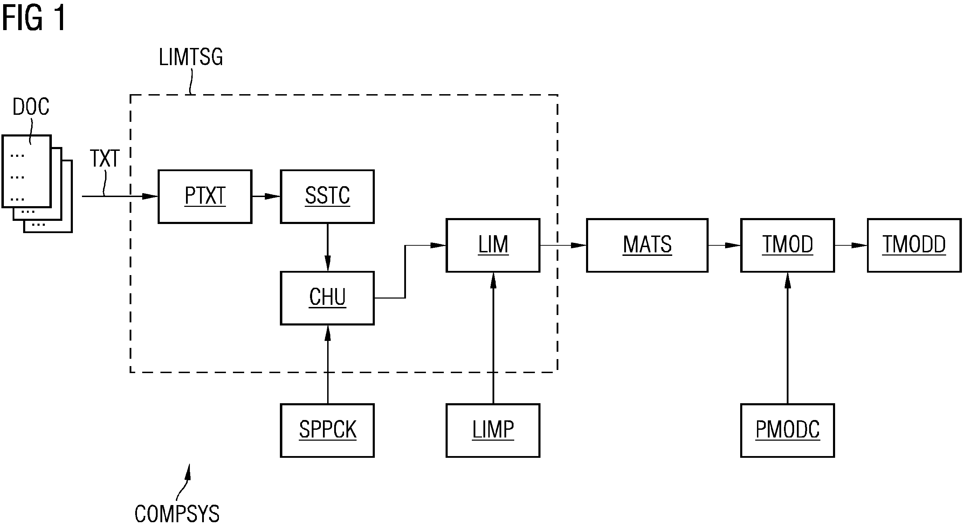

As a first prerequisite for carrying out the invention a computer system needs to be trained for conducting the method according to the invention. This procedure is explained at first:
As depicted in fig. 1, a computer system COMPSYS is trained with training data in the form of a patent documents DOC. Patent documents DOC are legal documents comprising technical solutions to problems. Thus, patent documents are used as a promising resource for finding technical problem solutions. Patent documents DOC can be transparently collected from public and/or commercial databases. In the present example, training data may be retrieved from public patent databases operated by patent offices that publish patent applications and patent grants as part of their obligations under common patent law regulations. In other examples, commercial patent databases may be consulted for the purpose of the invention. Furthermore, not necessarily patent documents have to be used as input data, but also unexamined intellectual property rights, such as utility model documents or applications for unexamined patents may be used in other examples as well.

The patent documents DOC are input into the computer system COMPSYS one at a time. The patent documents DOC are input into the computer system in a standardized format, here as a PDF-file each (PDF = *"portable document format"*). In other examples, patent documents may be utilized in other formats, such as the open document format (ODF) or proprietary formats like rich text format (RTF) or markup-language formats such as the hyper-text markup language (HTML) or extended markup language (XML). The patent documents DOC are preprocessed in order to extract the technologically descriptive content of the patent documents DOC which typically comprise a title, an introduction into the technological field, a general description of the respective technical problem solution, a description of the examples and figures and claims. Optionally, an abstract if provided is extracted as technologically descriptive content as well. For example, this is achieved with a text extraction program module, that extracts plain text PTXT from a PDF-file. From the extracted plain text PTXT, whitespaces, tabs and line breaks are removed.

The information contained in the plain text is furthermore split SSTC into different sentences. These sentences are further subjected to a known and established computational linguistics technology called masking which generates masked training sequences MATS. Such masked training sequences MATS are required as input into a language model TMODD.

Masking generates masked training sequences MATS by replacing words in a sequence with blanks. The language model TMODD is trained on the task of predicting the blanks in the sequence.

With the present invention, the masked training sequences MATS are generated in novel way: For conventional language models, the masking is done with a random choice of words to be masked. The present invention, in contrast, uses statistical peculiarities of the language typically contained in patent documents DOC and thus in the extracted plain text PTXT.

The statistical peculiarities of the language contained in patent documents DOC originate from linguistic characteristic of patent language. This linguistic characteristic is the frequent occurrence of multi-word terms which consist of novel combinations of single word terms and which are used to generally describe technical concepts. Particularly, compound words such as open compounds, here noun compounds, occur frequently in plain text PTXT of patent documents DOC. The invention makes use of these peculiarities of the language in patent documents DOC. The language model TMODD is trained by representations which are tailored towards these multi-word terms specifically: According to the invention, more text portions contained in multi-word portions such as noun compounds are masked LIM out than other words. Thus, the language model TMODD is specifically trained on the different semantic constructions of these novel combinations such as noun compounds which are specific for patent language. With this specific training of the language model TMODD, patent documents DOC and thus the technical problem solution contained therein can be specifically identified using this specifically trained language model. Accordingly, the patent document DOC and thus the technical problem solution contained in it can easier be found compared to currently known methods. This method of masking LIM applied in this example will also be called linguistically informed masking throughout this application.

Linguistically informed masking LIM of a sentence is conducted using three inputs: The first input is the sentence itself which is to be masked and is encoded as a sequence of tokens. The second input into linguistically informed masking LIM consists of the position information about the position of the noun compound phrases within the sentence. This requires solving the subtask of finding the noun compounds in a sentence first. Finding noun compounds within sentences can be solved with finding nouns in sentences. Finding nouns in sentences is a known computational linguistics technology and referred to as "chunking" CHU. For example, chunking CHU is conducted in the present invention using an industry-standard software module "Spacy" SPPCK for the programming language Python that automizes the chunking CHU task. Having identified noun phrases within a sentence, noun compounds can be identified as being open compound nouns. The third input into linguistically informed masking LIM is a configurable parameter to the linguistically informed masking LIM procedure. This configurable parameter to the linguistically informed masking LIM procedure denotes the fraction of the number of masked tokens which should appear in noun phrases and the number of masked tokens in general. This configurable parameter is referred to as the linguistically informed masking proportion LIMP. The linguistically informed masking proportion LIMP has a default value of 0.75 in the example depicted in fig. 1.

Linguistically informed masking as depicted in fig. 1 executes the following algorithm in order to achieve the default value of 0.75 for the linguistically informed masking proportion LIMP:
At first, a known, fixed proportion of tokens in the sequence will be masked. From this proportion and the length of the sequence, the number of tokens which should be masked in total is derived. This number is multiplied by the linguistically informed masking proportion LIMP to compute the number of masked tokens which should be drawn from inside noun compound chunks. In a subsequent step, this number of tokens are chosen randomly from inside noun compound chunks and the remaining required number of tokens are chosen from the remaining parts of the sentence for linguistically informed masking LIM. The positions of the chosen tokens are used to create a masking LIM vector. Finally, the masking LIM vector is applied to the sentence tokens to create the masked training sequence MATS.

The steps of extraction of plain text PTXT from the patent documents DOC, the splitting of the sequences SSTC, the chunking of the sentences CHU with the help of the module "spacy" SSPCK and the linguistically informed masking LIM using the linguistically informed masking proportion LIMP combined form a step of generating LIMTSG the masked training sequence MATS.

These masked training sequences MATS train the language model TMODD in a training process TMOD. The training process TMOD of training the language model TMODD follows established and known methods: The language model is realized as a neural network specifically configured for language training. The language model used in the example depicted in fig. 1 is the language model BERT (Bert = "Bidirectional Encoder Representations from Transformers"). In this example, the language model has been pretrained PMODC a in a conventional and known manner, e.g. as a language model named SciBERT, that represents a pretrained model for scientific text. In other examples, other language models may be used as well. The result is a trained language model TMODD for patent language, which is kept in a suitable database for carrying out the invention.

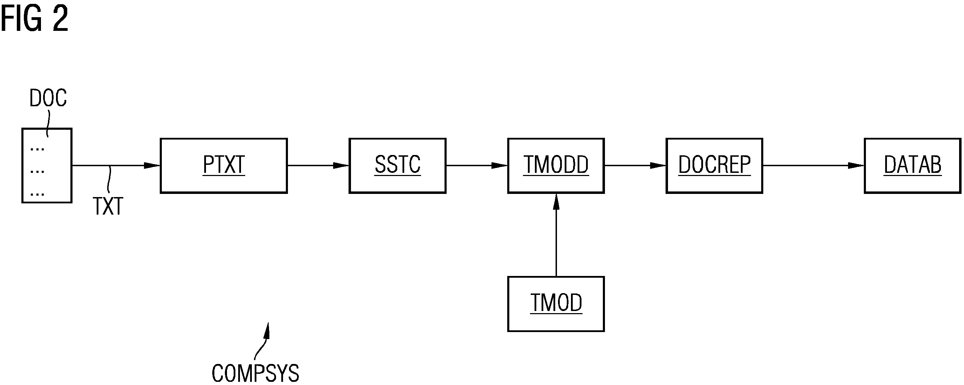

With the trained language model TMODD at hand, a database DATAB is built containing document representations DOCREP for a multitude of patent documents DOC. In the depicted example, document representations DOCREP for the full publicly available set of patent documents DOC such as published by the Word Intellectual Property Organization (WIPO) or the German Patent and Trademark Office (GPTO) or the European Patent Office (EPO) in a specific language, e.g. English, is used. Alternatively, a combination of patent document DOC archives by various offices and/or commercial suppliers may be used for carrying out the invention. Document representations DOCREP are computed by passing each sentence of the preprocessed text PTXT of the patent documents DOC through the trained TMOD language model TMODD as shown in Figure 2. When passing the sentences through the language model TMODD, each sentence is represented by a high dimensional vector of real numeric values. A suitable aggregation function takes these representations of each sentence as arguments and provides as a result a document representation DOCREP for a full patent document DOC. Such aggregation functions are generally known by persons skilled in the art. In this example, max pooling is used as an aggregation function. In other examples, aggregation functions such as mean pooling may be used. The document representations DOCREP in the example described here are represented as vectors.

As shown in fig. 2, the resulting document representations DOCREP are stored in the database DATAB together with metadata of the patent documents DOC. In the depicted example, metadata include an official file number and an internal database DATAB identification tag, patent class information such as IPC class information or CPC patent class information, author information, inventor information, applicant information, filing date and priority date information and textual information like title, abstract, claim and description. This database DATAB will serve as a pool of patent documents DOC containing technical problem solutions that are assigned document representations DOCREP. These document representations can be accessed and consulted for comparison in order to find specific patent documents DOC containing a desired technical problem solution. It is understood that some detailed steps explained using fig. 1 have been omitted in the representation of fig. 2 for reasons of ease of reading, such as the steps of splitting the plain text PTXT into sentences and chunking CHU. These steps are conducted in a similar manner as described for the case of training the language model TMODD.

With the database DATAB of document representations DOCREP, the method according to the invention can be easily carried out:
First, a desired search query for searching a technical problem solution is required. In this example, a published patent document DOC is used as a search query. The method of finding a technical problem solution is applied with the goal of finding a different patent document DOC contained in database DATAB that targets a similar technical problem solution as the published patent document DOC used as the search query.

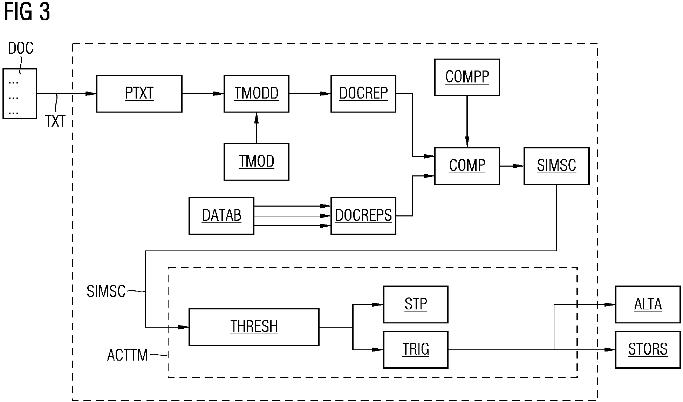

In a first step, the published patent document DOC used as a search query is received and plain text PTXT of the patent document DOC is extracted in order to input the plain text PTXT into the trained TMOD language model TMODD. Again, some more detailed steps already explained using fig. 1 are not explicitly shown in fig. 3, such as the steps of splitting the plain text PTXT into sentences and chunking CHU. The language model TMODD outputs a document representation DOCREP for the patent document DOC used as a search query.

In a comparison step COMP, the document representation DOCREP of this patent document DOC is compared with each of the document representations DOCREP stored in the database DATAB. The comparison COMP is conducted with a specific similarity definition COMPP that evaluates a similarity of two document representations DOCREP resulting in a similarity measure SIMSC. The similarity definition COMPP may contain configurable parameters for the comparison of the document representations DOCREP such as weights. In the depicted example, a cosine similarity is evaluated as a similarity measure, but other similarity measures such as a dot product may be used as well in other examples. The similarity measure is a real number between 0 and 1. The higher the score, the higher is the textual similarity of both patent documents DOC.

After evaluating the similarity measure SIMSC the document representation DOCREP of the database DATAB is not considered further STP in case this similarity measure SIMSC does not exceed a specific threshold THRESH that indicates a sufficiently good match.

If, however, the similarity measure SIMSC does exceed this threshold THRESH, an alert ALTA is triggered TRIG and the patent document DOC whose document representation DOCREP shows a high similarity to that of the patent document DOC used as a search query is stored in a storage system STORS.

The steps of threshold THRESH comparison and triggering TRIG or not considering further STP are realised with a software module which is referred to as an action triggering module ACTM in this description.

Each of the methods and processes described above are realized by computer programs that perform these methods. A first computer program is used for training the language model TMODD. A second computer program implements the language model TMODD and generates the database according to the invention. A third computer program carries out the usage of a given patent document DOC as a search query and finding a similar patent document DOC based on the similarity of document representations DOCREP.

In another example to conduct the method according to the invention, the technical problem solution is not necessarily found using a patent document DOC with an initial technical problem solution, but the patent documents DOC of the database DATAB are evaluated with respect to similarities of the document representations DOCREP among the patent documents DOC. In this example, the patent documents DOC are clustered based on similarity of the document representations DOCREP and arranged in a spatial patent landscape. The clusters are derived using a clustering algorithm, in this example k-means. Other clustering algorithms may be used in other examples as well.

## Claims

1. Computer-implemented method for finding a technical problem solution, comprising the steps of
- consulting a database (DATAB) comprising a multitude of intellectual property right documents (DOC) that comprise a linguistic expression (PTXT) of a technical problem solution,
- consulting a document content parameter (DOCREP) based on a statistic peculiarity of the linguistic expressions that is attributed to each of the intellectual property right documents (DOC) and that is specific for the content of the intellectual property right documents (DOC),
- utilizing the document content parameter (DOCREP) for finding at least one intellectual property right document (DOC) that contains the technical problem solution or for determining than no intellectual property right document (DOC) containing the technical problem solution can be found.

2. Method according to claim 1, wherein a document containing an initial technical problem solution is consulted, preferably an intellectual property right document (DOC) such as a patent document or a utility model document.

3. Method according to claim 2, wherein the document content parameter (DOCREP) based on the statistic peculiarity of the linguistic expressions is also attributed to the document containing the initial technical problem solution and wherein the document content parameter (DOCREP) of the latter is compared to the document content parameters (DOCREP) of the multitude of intellectual property right documents (DOC).

4. Method according to one of the preceding claims, wherein the intellectual property right documents (DOC) comprise patent documents and/or utility model documents.

5. Method according to one of the preceding claims, wherein the statistic peculiarity is a statistic peculiarity compared to everyday language or general technical language.

6. Method according to one of the preceding claims, wherein the statistic peculiarity is an occurrence of word compounds, particularly noun compounds.

7. Method according to one of the preceding claims, wherein the document content parameter (DOCREP) results from a neural network (TMODD) that represents a language model.

8. Method according to the preceding claim, wherein the document content parameter (DOCREP) results from an input to the neural network (TMODD) that is based on the intellectual property right document (DOC) of the database (DATAB) and/or the document containing the initial technical problem solution.

9. Method according to the preceding claim, wherein the input is masked (LIM) dependent on the statistic peculiarity prior the input to the neural network (TMODD).

10. Method according to one of the preceding claims, wherein finding the intellectual property right document (DOC) means finding the intellectual property right document (DOC) based on similarities (SIMSC) of the document content parameters (DOCREP).

11. Method according to the preceding claim, wherein the similarities are similarities (SIMSC) among the intellectual property right documents (DOREP) of the database (DATAB).

12. Database for conducting the computer-implemented method for finding a technical problem solution according to one of the preceding claims, comprising a multitude of intellectual property right documents (DOC) that comprise a linguistic expression of a technical problem solution, and comprising a document content parameter (DOCREP) based on a statistic peculiarity of the linguistic expressions (PTXT) that is attributed to each of the intellectual property right documents (DOC) and that is specific for the content of the intellectual property right documents (DOC).

13. Computer program product configured to carry out the steps according to claims 1 to 11.
